# EUROPEAN PATENT APPLICATION

(11) **EP 1 441 287 A2**
(43) Date of publication of application: **28.07.2004**
(21) Application number: 04250134.6
(22) Date of filing: 13.01.2004
(51) Int. Cl.: G06F 9/445, H04L 29/06

(54) **Software download system, communication apparatus, download center, and information recording medium with communication program**

(30) Priority: 21.01.2003 JP 2003012587
(71) Applicant: Pioneer Corporation, Tokyo-to (JP)
(72) Inventor: Hoshino, Hironobu, c/o Pioneer Corporation, Kawagoe-shi, Saitama-ken (JP)
(74) Representative: Haley, Stephen

(57) **Abstract**

A software download system (1) comprises a receiving apparatus (10) and a download center (20) that are connected via a communication line. The receiving apparatus (10) comprises a software storage unit (11) which stores a receiving software, a request information generating unit (12) which generates request information including a receiving condition or state of the receiving apparatus (10), a request information transmitting unit (13) which transmits the request information, a software receiving unit (14) which receives the receiving software, a software rewrite controlling unit (15) which rewrites the software storage unit (11) with the received receiving software, and a receiving unit (17) which executes the stored receiving software. The download center (20) comprises a software accumulating unit (21) which accumulates different kinds of receiving software, a request information receiving unit (22) which receives the request information, a software selecting unit (23) which selects an optimal receiving software in accordance with the request information, and a software transmitting unit (24) which transmits the selected receiving software.

## Description

The present invention relates to a software download system, a communication apparatus, a download center, and a communication program.

The conventional software download techniques involved a satellite download in the BS (Broadcasting Satellite) digital broadcast receiving apparatus or a program rewriting operation at a service site for the portable telephone.

In the conventional technique for automatically downloading a communication software optimal to terminal hardware and software environments, the terminals are interconnected via a communication node to make digital communications such as television telephone. A communication server accumulates various versions of communication software with which the terminal makes the communication control such as a call set-up. The communication server transmits an environment search program to the terminal, before downloading the software to the terminal. The terminal investigates his own hardware and software environments and reports the result to the communication server. The communication server analyzes the report result from the terminal, decides an optimal software to be transmitted to the terminal, and downloads the software to the terminal (e.g., refer to patent document 1).

### [Patent document 1]

Japanese Patent Application Laid-Open Publication No. Hei-8-263409 (paragraph number [0005])

However, since the BS digital broadcast receiving apparatus is employed in a fixed state, the program (firmware) is automatically updated in a time zone when the receiving apparatus is not employed, supposing that the receiving state such as receiving voltage level or the receiving information source is not frequently changed in the satellite download for the BS digital broadcast receiving apparatus. That is, there was no idea of selecting and downloading the suitable program in consideration of the receiving state on the receiving apparatus side.

Rewriting the program for the portable telephone is performed at the service site of the portable telephone company (carrier), and occurred less frequently. Also, the program was not selected and downloaded in accordance with the daily receiving state of the portable telephone.

On the other hand, in the conventional technique for automatically downloading the optimal communication software for the hardware and software environments of the terminal as described in the patent document 1, an environment searching program is transmitted to the terminal side, the agents on both the transmitting and receiving sides cooperate to search for the environment condition on the terminal side and decide the optimal software to be transmitted to the terminal side, whereby it was difficult to apply this conventional technique directly when the receiving state is changing every moment.

It is an object of the invention to provide a software download system, a communication apparatus, and a download center as well as a communication program in which the communication software can be rewritten in a short time in accordance with the receiving state of a communication apparatus while being monitored in real time.

The invention will be described below. For a better understanding of the invention, reference should be made to the accompanying drawings in which reference numerals are appended within the parentheses. However, the invention is not limited to the illustrated embodiments.

The above object of the present invention can be achieved by a software download system (1) for downloading a communication software from a download center (20) with which a communication apparatus (10) is connected via a communication line (30). The communication apparatus (10) is provided with: a software storage unit (11) which stores the communication software; a request information generating unit (12) which generates request information indicating at least a status of the communication apparatus (10) by recognizing the status of the communication apparatus (10); a request information transmitting unit (13) which transmits the request information to the download center (20); a software receiving unit (14) which receives the communication software transmitted from the download center (20); a software rewrite control unit (15) which rewrites contents of the software storage unit (11) with the received communication software; and a communication unit (17) which executes the stored communication software. The download center (20) is provided with: a software accumulating unit (21) which accumulates different kinds of communication software; a request information receiving unit (22) which receives the request information of the communication apparatus (10); a software selecting unit (23) which selects a suitable communication software from the software accumulating unit (21) in accordance with the received request information; and a software transmitting unit (24) which transmits the selected communication software to the communication apparatus (10).

The above object of the present invention can be achieved by a communication apparatus (10) provided with: a software storage unit (11) which stores communication software; a request information generating unit (12) which generates request information indicating at least a status of the communication apparatus (10) by recognizing the status of the communication apparatus (10); a request information transmitting unit (13) which transmits the request information to a download center (20); a software receiving unit (14) which receives the communication software transmitted from the download center (20); a software rewrite control unit (15) which rewrites contents of the software storage unit (11) with the received communication software; and a communication unit (17) which executes the stored communication software.

The above object of the present invention can be achieved by a download center (20) provided with: a software accumulating unit (21) which accumulates different kinds of communication software; a request information receiving unit (22) which receives request information of a communication apparatus (10); a software selecting unit (23) which selects a suitable communication software from the software accumulating unit (21) in accordance with the received request information; and a software transmitting unit (24) which transmits the selected communication software to the communication apparatus (10).

The above object of the present invention can be achieved by an information recording medium on which a communication program is recorded so as to be readable through a computer which is contained in a communication apparatus (10) with a pre-installed re-writable recording medium, and which causes the computer to function as: a software storage unit (11) which stores a communication software; a request information generating unit (12) which generates request information indicating at least a status of the communication apparatus (10) by recognizing the status of the communication apparatus (10); a request information transmitting unit (13) which transmits the request information to a download center (20); a software receiving unit (14) which receives the communication software transmitted from the download center (20); a software rewrite control unit (15) which rewrites contents of the software storage unit (11) with the received communication software; and a communication unit (17) which executes the stored communication software.

The above object of the present invention can be achieved by a communication apparatus (10) provided with: a software storage unit (11) which stores different kinds of communication software; a request information generating unit (12) which generates request information indicating at least a status of the communication apparatus (10) by recognizing the status of the communication apparatus (10); a software selecting unit (23) which selects communication software suitable for the status of the communication apparatus (10) from the software storage unit (11) based on the generated request information; and a communication unit (17) which executes the selected communication software.

The above object of the present invention can be achieved by an information recording medium on which a communication program is recorded so as to be readable through a computer which is contained in a communication apparatus (10) with a pre-installed re-writable recording medium, and which causes the computer to function as: a software storage unit (11) which stores different kinds of communication software; a request information generating unit (12) which generates request information indicating at least a status of the communication apparatus (10) by recognizing the status of the communication apparatus (10); a software selecting unit (23) which selects communication software suitable for the status of the communication apparatus (10) from the software storage unit (11) based on the generated request information; and a communication unit (17) which executes the selected communication software.

In the drawings:
FIG. 1 is a block diagram showing the components of a software download system according to a first embodiment of the present invention;
FIG. 2 is a flowchart showing the operation of the software download system 1 according to the first embodiment of the invention;
FIG. 3 is a table showing the request information generating criteria and the software selection criteria in the first embodiment;
FIG. 4 is a block diagram showing an example of a receiving apparatus 40 according to a second embodiment of the invention; and
FIG. 5 is a block diagram showing an example of a receiving apparatus 50 according to a third embodiment of the invention.

### (First embodiment)

A software download system according to a first embodiment of the present invention will be described below by way of example with reference to the accompanying drawings, in which the software download system is applied to a portable telephone having a receiving function of terrestrial digital TV broadcasting.

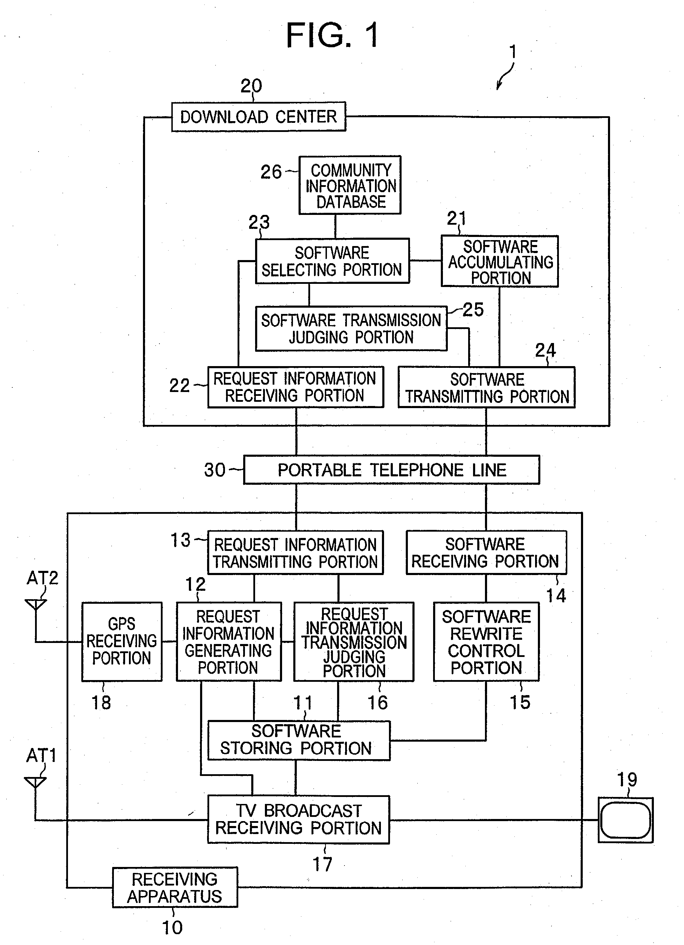

FIG. 1 is a block diagram showing the components of the software download system according to the first embodiment of the invention.

In the software download system 1 of the first embodiment, a receiving apparatus 10 is connected via a portable telephone line 30 to a download center 20.

The receiving apparatus 10 comprises a software storing portion 11, a request information generating portion 12, a request information transmitting portion 13, a software receiving portion 14, a software rewrite control portion 15, a request information transmission judging portion 16, a TV broadcast receiving portion 17, and a GPS receiving portion 18, which are built in a portable telephone (not shown).

The download center 20 comprises a software accumulating portion 21, a request information receiving portion 22, a software selecting portion 23, a software transmitting portion 24, a software transmission judging portion 25, and a community information database 26.

Herein, for example, the software download system 1 in the first embodiment may be a software download system according to the invention, the receiving apparatus 10 may be a communications apparatus according to the invention, the download center 20 may be a download center according to the invention, and the portable telephone line 30 may be a telecommunication circuit according to the invention.

Also, in the receiving apparatus 10, for example, the software storing portion 11 in the first embodiment may be a software storage unit according to the invention, the request information generating portion 12 may be a request information generating unit according to the invention, the request information transmitting portion 13 may be a request information transmitting unit according to the invention, the software receiving portion 14 may be a software receiving unit according to the invention, the software rewrite control portion 15 may be a software rewrite control unit according to the invention, the request information transmission judging portion 16 may be a request information transmission judging unit, the TV broadcast receiving portion 17 may be a receiving unit according to the invention, and the GPS receiving portion 18 may be a position information acquiring unit according to the invention.

Moreover, in the download center 20, for example, the software accumulating portion 21 in the first embodiment may be a software accumulating unit according to the invention, the request information receiving portion 22 may be a request information receiving unit according to the invention, the software selecting portion 23 may be a software selecting unit according to the invention, the software transmitting portion 24 may be a software transmitting unit according to the invention, the software transmission judging portion 25 may be a software transmission judging unit according to the invention, and the community information database 26 may be a community information database according to the invention.

In the receiving apparatus 10, the software storing portion 11 is composed of, for example, a flash memory to store a receiving software. In the software storing portion 11, the receiving software is stored in a rewritable state.

The request information generating portion 12 is composed of, for example, a CPU (Central Processing Unit) to monitor the receiving condition or receiving state of the receiving apparatus 10 (TV broadcast receiving apparatus 17) and generate the request information indicating the receiving condition or receiving state of the receiving apparatus 10. The request information includes the software information indicating the kind and version number of the current receiving software of the receiving apparatus 10, and the position information output from the GPS receiving portion 18.

The request information transmitting portion 13 is composed of, for example, a communication circuit of portable telephone to transmit the request information to the download center 20. In the first embodiment, the request information is transmitted employing a portable telephone function.

The software receiving portion 14 is composed of, for example, a communication circuit of portable telephone to receive a receiving software transmitted from the download center 20, and output it to the software rewrite control portion 15.

The software rewrite control portion 15 is composed of, for example, the CPU to rewrite the contents of the software storing portion 11 with the receiving software that has been received.

The request information transmission judging portion 16 is composed of, for example, the CPU to judge whether or not to transmit the request information to the download center 20.

The TV broadcast receiving portion 17 is composed of, for example, a TV broadcast receiving circuit and the CPU to receive the terrestrial digital TV broadcast wave via an antenna AT1 for receiving the terrestrial digital TV broadcast wave, to demodulate the received terrestrial digital TV broadcast wave using the stored receiving software, and to display the demodulated digital TV broadcast signal on a display 19.

The GPS receiving portion 18 is composed of, for example, a GPS antenna AT2 and a GPS (Global Positioning System) receiving apparatus to receive electric wave from a GPS satellite, and calculate and output the position of the receiving apparatus 10 to the request information generating portion 12.

In the download center 20, the software accumulating portion 21 is composed of, for example, an external storage device such as an HD (Hard Disk Drive) or a magnetic tape to accumulate various kinds of receiving software. The accumulated receiving software may be updated, as needed.

The request information receiving portion 22 is composed of, for example, a communication circuit of portable telephone to receive the request information of the receiving apparatus 10.

The software selecting portion 23 is composed of, for example, the CPU to recognize the receiving condition or receiving state of the receiving apparatus 10 from the request information, and select a receiving software suitable for the receiving condition or receiving state of the receiving apparatus 10 from among the receiving software accumulated in the software accumulating portion 21. Also, it makes an inquiry for the community information to the community information database 26 based on the position information included in the request information.

The software transmitting portion 24 is composed of, for example, a communication circuit of a portable telephone to transmit the selected receiving software. In the first embodiment, the selected receiving software is transmitted via the portable telephone line 30.

The software transmission judging portion 25 is composed of, for example, the CPU to judge whether or not to transmit the selected receiving software to the receiving apparatus 10.

The community information database 26 is composed of, for example, a storage device storing the map data and the relevant data to output the community information corresponding to the position information in response to an inquiry from the software selecting portion 23.

The portable telephone line 30 is composed of, for example, a portable telephone network to connect the receiving apparatus 10 with the download center 20.

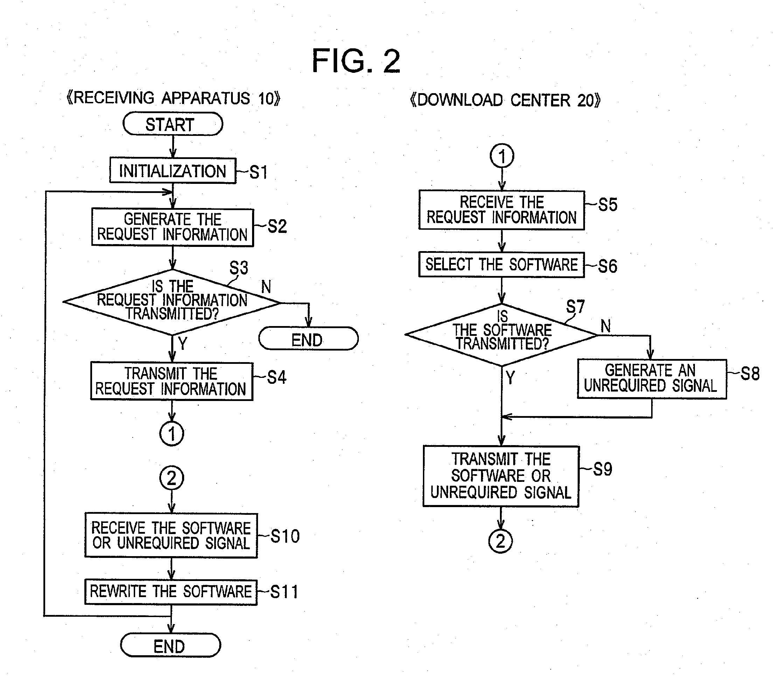

Referring now to a flowchart of FIG. 2, the operation of the software download system 1 with the above constitution will be described.

FIG. 2 is a flowchart showing the operation of the software download system 1 according to the first embodiment of the invention.

In an initial state, the TV broadcast receiving unit 17 built in the portable telephone receives the terrestrial digital TV broadcast, in which the receiving apparatus 10 is set in a software automatic change mode (S1).

The request information generating portion 12 monitors the receiving condition or receiving state of the receiving apparatus 10 (TV broadcast receiving unit 17) and generates the request information on the basis of the criteria as described later (S2).

The request information transmission judging portion 16 judges whether or not to transmit the request information to the download center 20 (S3). Specifically, it judges whether or not the receiving condition or receiving state of the receiving apparatus 10 is adaptable to the current software based on the request information.

If it is judged that it is necessary to transmit the request information because the receiving condition or receiving state of the receiving apparatus 10 is not adaptable to the current software (S3: Y), the request information transmitting portion 13 transmits the generated request information to the download center 20 (S4).

The request information receiving portion 22 in the download center 20 receives the request information of the receiving apparatus 10 (S5), and the software selecting portion 23 analyzes the request information and selects the software adapted to the receiving apparatus 10 (S6).

Then, the software transmission judging portion 25 analyzes the request information, and judges whether or not the selected receiving software is different from the receiving software installed in the receiving apparatus 10 (S7).

If it is judged that it is necessary to transmit the receiving software because the selected receiving software is different from the receiving software installed in the receiving apparatus 10 (S7: Y), the software transmitting portion 24 reads the selected receiving software from the software accumulating portion 21 and transmits it to the receiving apparatus 10 (S9).

On the other hand, if it is judged that it is unnecessary to transmit the receiving software because the selected receiving software is not different from the receiving software installed in the receiving apparatus 10 (S7: N), the software transmission judging portion 25 generates a rewrite unrequired signal indicating that it is unnecessary to rewrite the receiving software (S8), and the software transmitting portion 24 sends the signal to the receiving apparatus 10 (S9).

The software receiving portion 14 of the receiving apparatus 10 receives the receiving software or the rewrite unrequired signal transmitted from the download center 20 (S10). When accepting the receiving software, the software rewrite control portion 15 rewrites the contents of the software storing portion 11 with the accepted receiving software (S11).

Through the above processes, the operation of downloading the receiving software in the software download system 1 is completed.

A process in which the request information generating portion 12 recognizes the receiving condition or receiving state of the receiving apparatus 10 in the request information generating process (S2) will be detailed below.

The criteria for the request information generating portion 12 to recognize the receiving condition or receiving state of the receiving apparatus 10 (TV broadcast receiving unit 17) and generate the request information in the request information generating process (S2) are exemplified below.
(A) When the power level of a receiving signal is different from the supposed power level for the receiving software.
(B) When the receiving signal is likely to be out of synchronization and followed by the current receiving software with difficulties.
(C) When the unique information for the receiving signal such as the modulation method or error correcting system of the receiving signal is obtained.
(D) When the multipath disturbance is recognized from the transmission path information obtained by decoding the receiving signal and excluded by the current receiving software with difficulties.
(E) When the receiving signal has a high BER (Bit Error Rate) and is corrected for error by the current receiving software with difficulties.
(F) When the information indicating that the receiving signal is the multiple signal of video and audio is received.
(G) When the changed receiving condition or receiving state such as the receiving site or moving speed is known from the position information output from the GPS receiving portion 18 and the current receiving software is not adaptable.

In the request information transmission judging process (S3), when at least two of the above criteria for generating the request information are met, the request information transmission judging portion 16 transmits the request information to the download center 20, because the current receiving software is not adaptable to the current receiving condition or receiving state.

Then, in the software selecting process (S6), the software selecting portion 23 analyzes the received request information and selects the software suitable for the receiving apparatus 10. This process (S6) will be more specifically described below in accordance with the first embodiment.
(a) When the power level of a receiving signal is different from the supposed power level for the current receiving software, the receiving software having a high precision of arithmetical operation that can receive a receiving signal at excellent sensitivity is selected.
(b) When the receiving signal is likely to be out of synchronization and not followed by the current receiving software with difficulties, the receiving software having the high synchronizing performance is selected.
(c) When the unique information for the receiving signal such as the modulation method or error correcting system of the receiving signal is obtained, the receiving software optimal to the unique information and performing less redundant processing is selected.
(d) When the multipath disturbance is recognized from the transmission path information obtained by decoding the receiving signal and excluded by the current receiving software with difficulties, the receiving software suitable for removal of the multipath is selected.
(e) When the receiving signal has a high BER and is corrected for error by the current receiving software with difficulties, the receiving software having a higher ability of correcting errors is selected.
(f) When the information indicating that the receiving signal is the multiple signal of video and audio is obtained, the receiving software installing a less redundant decoding program is selected.
(g) When the changed receiving condition or receiving state such as the receiving site or moving speed is known from the position information output from the GPS receiving portion 18 and the current receiving software is not adaptable, the receiving software adaptable to the receiving condition or receiving state is selected.

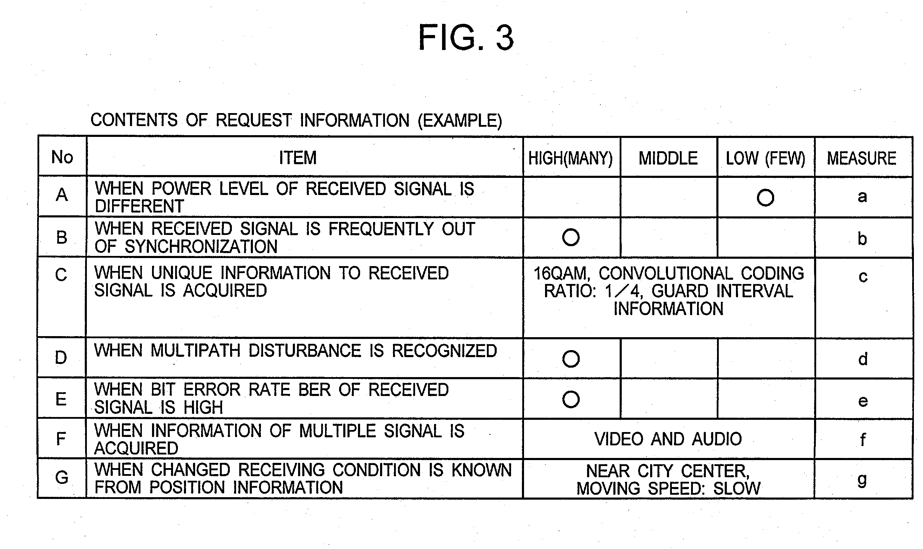

The generating criteria in the request information generating process (S2) and the selecting criteria in the software selecting process (S6) are summarized as shown in FIG. 3. FIG. 3 is a table showing the request information generating criteria and the software selecting criteria in the first embodiment. The sign of capital alphabet in the left column of FIG. 3 corresponds to the sign of capital alphabet in the description of the first embodiment, and indicates from which the receiving condition and receiving state of the receiving apparatus 10 on which the request information generation is based is acquired in the receiving apparatus 10.

There are the following effects in the first embodiment.

The receiving software of the software storing portion 11 can be rewritten by monitoring the receiving condition or receiving state of the receiving apparatus 10 and downloading the receiving software adaptable to the receiving condition or receiving state from the download center 20.

It is unnecessary to store in advance the software of large size or plural pieces of software adaptable to various receiving conditions or states in the receiving apparatus 10, because the receiving software adaptable to the receiving condition or receiving state of the receiving apparatus 10 is downloaded. Hence, the storage capacity of the software storing portion 11 is reduced and the manufacturing cost of the receiving apparatus 10 is suppressed.

It is only necessary that the updating operation of the receiving software is performed in the download center 20, because the receiving software is accumulated in the software accumulating portion 21 in the download center 20. That is, the updating operation is only completed in the download center 20 on the supply side of the receiving software. Also, when it is necessary to download the receiving software on the user side because the receiving condition or receiving state is changed, the latest receiving software is automatically downloaded, whereby the user is unnecessary to worry about the update of the receiving software and has lower complexity.

The receiving software is selected from the position information included in the received request information, in consideration of the community information output from the community information database 26, because the position information output from the GPS receiving portion 18 is included in the request information. For example, in a receiving condition or receiving state of receiving the terrestrial digital broadcasting while moving near the city center with intense receiving strength close to the broadcasting station, the receiving software suitable for removal of the multipath is selected. Also, for example, in a receiving condition or receiving state of riding on the train of Chuo Line of East Japan Railway Company at present, it is confirmed, on the basis of the community information database in the download center 20, that the receiving condition or receiving state is excellent in a train on the Chuo Line because electric wave is retransmitted within the train, whereby the receiving software suitable for receiving at the stationary position is selected.

Since the receiving software adaptable to the receiving condition or receiving state is executed, the TV broadcast receiving portion 17 has an additional coverage for the throughput, when the receiving software requiring less great throughput is selected and executed, namely, when the so-called light receiving software is executed. Hence, another signal processing is performed in a wider range of throughput. For example, since the receiving software adaptable to receiving at the stationary position has a smaller amount of processing, if the portable telephone has an Internet connection function, it is possible to peruse the browser or receive the data broadcasting, while receiving the TV broadcast.

The first embodiment is not limited to that as described above, but may be changed as in the following.

In the first embodiment, the invention is applied to the portable telephone having a receiving function of the terrestrial TV broadcasting, in which the receiving apparatus 10 and the download center 20 are connected via the portable telephone line 30. However, when the invention is applied to another system, a connecting device for connecting the receiving apparatus 10 and the download center 20 may be implemented via the Internet, telephone lines, satellite communications, infrared communications, or a composite form of them. That is, it is only required that the receiving apparatus 10 and the download center 20 can be communicated.

In the process (S11) in which the software rewrite control portion 15 rewrites the contents of the software storing portion 11 using the accepted receiving software, the receiving apparatus 10 may not perform the operation other than rewriting the receiving software.

In the first embodiment, the communication unit of the invention is employed for the TV broadcast receiving unit 17 for the terrestrial digital TV broadcasting, but may be applicable to the other systems, for example, the receiving apparatus for AM broadcasting or FM broadcasting. Furthermore, it may be applied to the mobile communication apparatus such as the portable telephone or PHS (Personal Handyphone System) telephone. The receiving (communicating) software is switched to receive (communicate) data by downloading it depending on the receiving condition or receiving state (communication condition or communication state) to receive (communication).

### (Second embodiment)

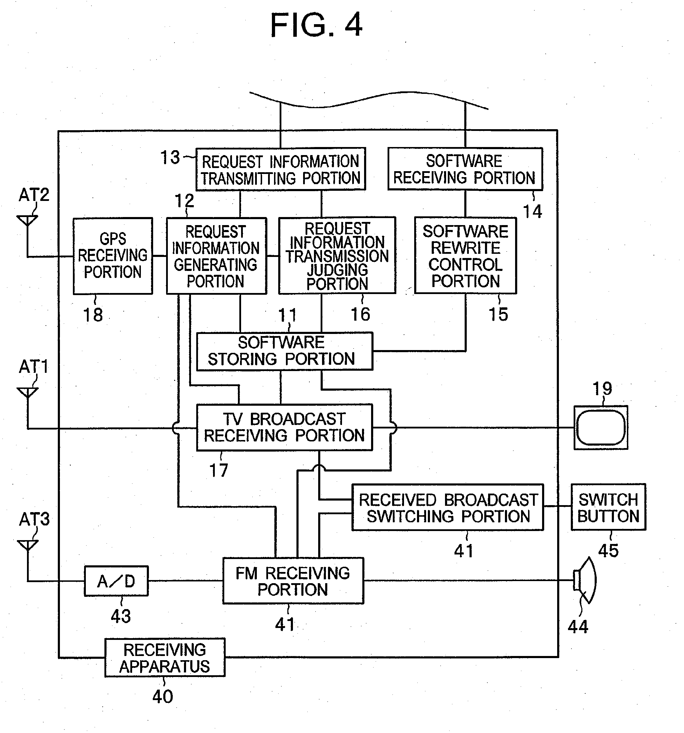

FIG. 4 is a block diagram showing an example of a receiving apparatus 40 according to a second embodiment of the invention. In FIG. 4, the common parts to those of FIG. 1 are designated by the same numerals, and not described here. Also, the portable telephone line 30 (communication unit) via which the receiving apparatus communicates and the download center 20 are the same as in the first embodiment, and not shown and described here.

Though in the first embodiment the receiving apparatus 10 receives the terrestrial digital TV broadcast in the TV broadcast receiving unit 17, in the second embodiment 2 the receiving apparatus 40 has a FM broadcast receiving portion 41, in addition to the TV broadcast receiving portion 17, and further a received broadcast switching portion 42 for switching the broadcast received by the receiving apparatus 40 between terrestrial digital TV broadcasting and FM broadcasting.

Herein, for example, the receiving apparatus 40 in the second embodiment may be the communication equipment according to the invention, the FM broadcast receiving portion 41 may be the receiving unit according to the invention, and the received broadcast switching portion 42 may be the received broadcast switching unit according to the invention.

The FM broadcast receiving portion 41 is composed of, for example, a FM broadcast receiving circuit and the CPU. When FM broadcasting wave is entered via an antenna AT3 receiving the FM broadcast wave and an A/ D converter 43 for converting the received FM broadcast wave into digital form, the FM broadcast receiving portion 41 demodulates the received FM broadcasting wave employing the stored receiving software and output it to a speaker 44.

The received broadcast switching portion 42 is composed of, for example, the CPU to switch the broadcasting received by the receiving apparatus 10 between terrestrial digital TV broadcasting and FM broadcasting.

The receiving apparatus 40 having the above constitution transmits the request information to make a request for the receiving software adaptable to the broadcasting wave to be received and downloads the corresponding receiving software from the download center 20, when receiving the terrestrial digital TV broadcasting or FM broadcasting.

The second embodiment has the following effects.

It is unnecessary to store in advance the software (of large size) or plural pieces of software adaptable to every receivable broadcasting wave in the receiving apparatus 40, because the receiving software adaptable to the broadcasting wave to be received such as the terrestrial digital TV broadcasting or FM broadcasting is downloaded. Hence, the storage capacity of the software storing portion 11 is reduced and the manufacturing cost of the receiving apparatus 40 is suppressed. For example, when the user is receiving the terrestrial digital TV broadcasting but can not probably receive the terrestrial digital TV broadcasting at that site because the average BER (C/N) is bad, and tries to receive the FM broadcasting likely to be received stably, the user transmits the request information regarding the receiving condition or receiving state of FM broadcasting to the download center 20 to download the receiving software for receiving the FM broadcasting, and cause the received broadcast switching portion 42 to switch the received broadcast from the terrestrial digital TV broadcasting to the FM broadcasting, thereby taking pleasure in the FM broadcasting.

The second embodiment is not limited to that as described above, but may be changed in the following way.

Switching the received broadcast may be made by the user manipulating a switch button 45 provided, or when the receiving situation is not good, the received broadcast may be switched in accordance with a predetermined order of priority.

When the user is receiving the ISDB-T (12seg) + data (1seg) on the portable telephone, but cannot probably receive it at that site because the average BER (C/N) is bad, and tries to receive the radio broadcasting likely to be received stably, the request information making a request for the receiving software for receiving the radio broadcasting is issued, the receiving software for receiving the data broadcasting and radio broadcasting may be download, employing the software download system comprising the receiving apparatus 40 of the second embodiment. Since the receiving software for receiving the radio broadcasting has a small signal processing amount, it is possible to download the receiving software for receiving the data broadcast at the same time.

### (Third embodiment)

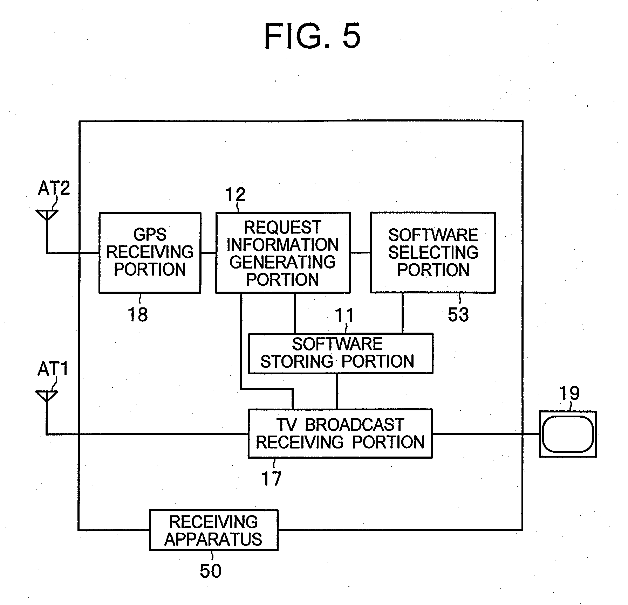

FIG. 5 is a block diagram showing an example of a receiving apparatus 50 according to a third embodiment of the invention. In FIG. 5, the common parts to those of FIGS. 1 or 4 are designated by the same numerals, and not described here.

In the first embodiment, the software download system 1 has the receiving apparatus 10 and the download center 20 connected via the portable telephone line 30, the software storing portion 11 is reduced to the extent capable of storing the receiving software, the receiving software adaptable to the receiving condition or receiving state is downloaded. However, the third embodiment has a feature that the receiving apparatus 50 internally includes a software selecting portion 53 composed of, for example, the CPU, the software storing portion 11 stores the receiving software adaptable to various receiving conditions or receiving states, the software selecting portion 53 selects the receiving software adaptable to the receiving condition or receiving state, and the TV broadcast receiving portion 17 receives the TV broadcasting.

In the third embodiment, though the receiving condition or receiving state is monitored, the request information is not transmitted to the download center 20, but the software selecting portion 53 retrieves the receiving software adaptable to the receiving condition or receiving state from the software storing portion 11, based on the generated request information, thereby receiving the broadcasting.

The third embodiment has the following effects.

It is possible to receive the broadcasting in excellent receiving condition at any time without interruption by the user, because the receiving software adaptable to the receiving condition or receiving state is switched, as needed.

The receiving software adaptable to the receiving condition or receiving state can be switched rapidly, because the request information and the receiving software are not transmitted or received to or from the download center 20. Hence, the user can receive the broadcasting in excellent receiving condition even in a district where the communication with the download center 20 is bad.

It takes no time to switch the receiving software even in a situation where the receiving condition or receiving state is changing every moment such as within a compartment of the moving vehicle, because it is unnecessary to take the time for downloading the receiving software, whereby the user can receive the broadcasting in excellent receiving condition.

The third embodiment is not limited to that as described above, but may changed in the following way.

Though the receiving unit is the TV broadcast receiving portion 17 alone in the third embodiment, it may have the FM receiving portion 41 and the received broadcast switching portion 42 in addition to the TV broadcast receiving portion 17, as in the second embodiment, and the receiving software may be switched in accordance with the switched broadcasting. Switching the received broadcast may be made by user's manipulating the switch button 45 provided, or when the receiving situation is not good, the received broadcast may be switched in accordance with a predetermined order of priority.

Though the third embodiment is different from the first embodiment in that the receiving software is not downloaded from the download center 20, the receiving software may be downloaded from the download center 20, when the receiving software adaptable to the receiving condition or receiving state does not exist in the software storing portion 11. That is, the third embodiment and the first embodiment may be combined. The receiving software adaptable to the receiving condition or receiving state that frequently occurs may be stored in the software storing portion 11 and the receiving software adaptable to the receiving condition or receiving state that less frequently occurs may be downloaded from the download center 20, whereby a communication amount is reduced. Also, communication means can be ensured, making it easy to update the receiving software in the receiving apparatus 50.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A software download system (1) for downloading a communication software from a download center (20) with which a communication apparatus (10) is connected via a communication line (30), **characterized in that**
the communication apparatus (10) comprises:
a software storage unit (11) which stores the communication software;
a request information generating unit (12) which generates request information indicating at least a status of the communication apparatus (10) by recognizing the status of the communication apparatus (10);
a request information transmitting unit (13) which transmits the request information to the download center (20);
a software receiving unit (14) which receives the communication software transmitted from the download center (20);
a software rewrite control unit (15) which rewrites contents of the software storage unit (11) with the received communication software; and
a communication unit (17) which executes the stored communication software, and
the download center (20) comprises:
a software accumulating unit (21) which accumulates different kinds of communication software;
a request information receiving unit (22) which receives the request information of the communication apparatus (10);
a software selecting unit (23) which selects a suitable communication software from the software accumulating unit (21) in accordance with the received request information; and
a software transmitting unit (24) which transmits the selected communication software to the communication apparatus (10).

2. The software download system (1) according to claim 1, **characterized in that**
the communication unit (17) has a function of receiving broadcast, and
the communication software is a receiving software.

3. The software download system (1) according to claim 2, **characterized in that**
the communication unit (17) has a function of receiving different kinds of broadcast, and
the communication apparatus (10) further comprises a received broadcast switching unit (42) which switches the kind of broadcast received by the communication unit (17).

4. The software download system (1) according to claim 1, **characterized in that**
the communication unit (17) has a function of the mobile communication apparatus.

5. The software download system (1) according to any one of claims 1 to 4, **characterized in that**
the communication apparatus (10) further comprises a request information transmission judging unit (16) which judges whether or not the request information should be transmitted to the download center (20).

6. The software download system (1) according to any one of claims 1 to 5, **characterized in that**
the download center (20) further comprises a software transmission judging unit (25) which judges whether or not the selected communication software should be transmitted to the communication apparatus (10).

7. The software download system (1) according to any one of claims 1 to 6, **characterized in that**
the communication apparatus (10) further comprises a position information acquiring unit (18) which acquires a position information of the communication apparatus (10), and
the request information generating unit (12) makes the request information include the position information, and wherein
the download center (20) further comprises a community information database (26), and
the software selecting unit (23) refers to the community information database (26) based on the position information included in the request information and selects a suitable communication software in consideration of a communication environment based on the position of the communication apparatus (10).

8. A communication apparatus (10) **characterized by**:
a software storage unit (11) which stores communication software;
a request information generating unit (12) which generates request information indicating at least a status of the communication apparatus (10) by recognizing the status of the communication apparatus (10);
a request information transmitting unit (13) which transmits the request information to a download center (20);
a software receiving unit (14) which receives the communication software transmitted from the download center (20);
a software rewrite control unit (15) which rewrites contents of the software storage unit (11) with the received communication software; and
a communication unit (17) which executes the stored communication software.

9. The communication apparatus (10) according to claim 8, **characterized in that**
the communication unit (17) has a function of receiving broadcast, and
the communication software is a receiving software.

10. The communication apparatus (10) according to claim 9,
**characterized in that**
the communication unit (17) has a function of receiving different kinds of broadcast, and
the communication apparatus (10) further comprises a received broadcast switching unit (42) which switches the kind of broadcast received by the communication unit (17).

11. The communication apparatus (10) according to any one of claims 8 to 10, **characterized in that**
the request information generating unit (12) generates request information to make a request for communication software with a high precision of arithmetical operation that can receive a receiving signal at excellent sensitivity, when the power level of the receiving signal is different from the supposed power level for the current communication software.

12. The communication apparatus (10) according to any one of claims 8 to 10, **characterized in that**
the request information generating unit (12) generates request information to make a request for communication software with the high synchronizing performance, when the receiving signal is likely to be out of synchronization.

13. The communication apparatus (10) according to any one of claims 8 to 10, **characterized in that**
the request information generating unit (12) generates request information to make a request for communication software optimal to a unique information, when the unique information for the receiving signal is obtained.

14. The communication apparatus (10) according to any one of claims 8 to 10, **characterized in that**
the request information generating unit (12) generates request information to make a request for communication software suitable for removal of the multipath, when the multipath disturbance is recognized.

15. The communication apparatus (10) according to any one of claims 8 to 10, **characterized in that**
the request information generating unit (12) generates request information to make a request for communication software with a higher ability of correcting errors, when the receiving signal has a high Bit Error Rate.

16. The communication apparatus (10) according to any one of claims 8 to 10, **characterized in that**
the request information generating unit (12) generates request information to make a request for communication software with a decoding program suitable for a multiple signal, when the information indicating that the receiving signal is the multiple signal is obtained.

17. The communication apparatus (10) according to any one of claims 8 to 10, further comprising a position information acquiring unit (18) which acquires position information of the communication apparatus (10), **characterized in that**
the request information generating unit (12) generates request information including the position information.

18. The communication apparatus (10) according to claim 10, **characterized in that**
the request information generating unit (12) generates request information to make a request for communication software adaptable to the broadcast to be received, when the received broadcast switching unit (42) switches the received broadcast.

19. The communication apparatus (10) according to claim 10, **characterized in that**
the request information generating unit (12) generates request information to make a request for communication software for receiving data broadcasting at the same time, when the communication unit (17) has a small amount of signal processing for receiving broadcast.

20. The communication apparatus (10) according to any one of claims 8 to 19, **characterized by** a request information transmission judging unit (16) which judges whether or not the request information should be transmitted to the download center (20).

21. The communication apparatus (10) according to claim 20, **characterized in that**
the request information transmission judging unit (16) judges whether or not the status of the communication apparatus (10) is adaptable to the current communication software based on the generated request information.

22. The communication apparatus (10) according to any one of claims 8 to 21, **characterized in that**
the request information includes software information of the current communication software of the communication apparatus (10).

23. The communication apparatus (10) according to claim 8, **characterized in that**
the communication apparatus (10) has a function of a mobile communication apparatus.

24. A download center (20) **characterized by**:
a software accumulating unit (21) which accumulates different kinds of communication software;
a request information receiving unit (22) which receives request information of a communication apparatus (10);
a software selecting unit (23) which selects a suitable communication software from the software accumulating unit (21) in accordance with the received request information; and
a software transmitting unit (24) which transmits the selected communication software to the communication apparatus (10).

25. The download center (20) according to claim 24, **characterized in that**
the download center (20) further comprises a software transmission judging unit (25) which judges whether or not the selected communication software should be transmitted to the communication apparatus (10).

26. The download center (20) according to claim 25, **characterized in that**
the software transmission judging unit (25) recognized the software information of the current communication software of the communication apparatus (10) based on the received request information, and
the software transmission unit (24) transmits the selected communication software to the communication apparatus (10), when the selected communication software is judged to be different from the communication software installed in the communication apparatus (10).

27. The download center (20) according to any one of claims 24 to 26, **characterized in that**
the download center (20) further comprises a community information database (26),
the software selecting unit (23) refers to the community information database (26) based on the position information of the communication apparatus (10) included in the received request information, and selects a suitable communication software in consideration of the communication environment based on the position of the communication apparatus (10).

28. An information recording medium on which a communication program is recorded so as to be readable through a computer which is contained in a communication apparatus (10) with a pre-installed re-writable recording medium, and which causes the computer to function as:
a software storage unit (11) which stores a communication software;
a request information generating unit (12) which generates request information indicating at least a status of the communication apparatus (10) by recognizing the status of the communication apparatus (10);
a request information transmitting unit (13) which transmits the request information to a download center (20);
a software receiving unit (14) which receives the communication software transmitted from the download center (20);
a software rewrite control unit (15) which rewrites contents of the software storage unit (11) with the received communication software; and
a communication unit (17) which executes the stored communication software.

29. The information recording medium according to claim 28, **characterized in that**
the communication apparatus (10) does not perform the operation other than rewriting the communication software, while the communication apparatus (10) is rewriting contents of the software storage unit (11) with the received communication software.

30. A communication apparatus (10) **characterized by**:
a software storage unit (11) which stores different kinds of communication software;
a request information generating unit (12) which generates request information indicating at least a status of the communication apparatus (10) by recognizing the status of the communication apparatus (10);
a software selecting unit (23) which selects communication software suitable for the status of the communication apparatus (10) from the software storage unit (11) based on the generated request information; and
a communication unit (17) which executes the selected communication software.

31. An information recording medium on which a communication program is recorded so as to be readable through a computer which is contained in a communication apparatus (10) with a pre-installed re-writable recording medium, and which causes the computer to function as:
a software storage unit (11) which stores different kinds of communication software;
a request information generating unit (12) which generates request information indicating at least a status of the communication apparatus (10) by recognizing the status of the communication apparatus (10);
a software selecting unit (23) which selects communication software suitable for the status of the communication apparatus (10) from the software storage unit (11) based on the generated request information; and
a communication unit (17) which executes the selected communication software.
